# EUROPÄISCHE PATENTSCHRIFT

(11) **EP 0 962 354 B1**
(45) Veröffentlichungstag und Bekanntmachung des Hinweises auf die Patenterteilung: **12.03.2008**
(21) Anmeldenummer: 99890138.3
(22) Anmeldetag: 29.04.1999
(51) Int. Cl.: B60M 1/28

(54) **Maschine zum Verlegen eines Fahrdrahtes einer Oberleitung**
Installation machine for a catenary line
Machine d'installation d'une ligne caténaire

(30) Priorität: 04.06.1998 DE 29809971 U
(43) Veröffentlichungstag der Anmeldung: 08.12.1999
(73) Patentinhaber: Franz Plasser Bahnbaumaschinen-Industriegesellschaft m.b.H., 1010 Wien (AT)
(72) Erfinder: Theurer, Josef, 1010 Wien (AT); Gruber, Leopold, 3270 Scheibbs (AT)

(56) Entgegenhaltungen:
- EP-A- 0 416 136
- DE-C- 4 334 063
- US-A- 4 213 596

## Beschreibung

Die Erfindung betrifft eine gleisverfahrbare Maschine zum Verlegen eines Fahrdrahtes und/oder eines Tragseiles einer Oberleitung eines Gleises, mit einem auf Schienenfahrwerken abgestützten Maschinenrahmen und einem mit diesem verbundenen Trägerrahmen, der eine aufgewickelten Fahrdraht bzw. Tragseil beinhaltende Speichertrommel und eine zur Aufbringung der vorgeschriebenen Zugspannung vorgesehene Zugspannungsvorrichtung aufweist, sowie mit einer Umlenkrolle zum höhen- und seitenmäßigen Führen des Drahtes.

Aus der EP-A1 0 776 780 ist bereits eine derartige Maschine bekannt, bei der der Trägerrahmen als um eine in Maschinenlängsrichtung verlaufende Achse verschwenkbare, pendelnd aufgehängte Wippe ausgebildet ist. Zusätzlich zu Speichertrommel und Zugspannungsvorrichtung ist auf dem Tragrahmen eine die Umlenkrolle aufweisende, höhenverstellbare Führungseinrichtung angeordnet. Im Arbeitseinsatz wird diese entsprechend der gewünschten Verlegehöhe vertikal verstellt und der von der Speichertrommel über die Zugspannungsvorrichtung abgezogene Draht über die Umlenkrolle geführt. Zur Herstellung des erforderlichen, korrekten Zick-Zack-Verlaufes der verlegten Oberleitung wird die Umlenkrolle durch Kippen des Trägerrahmens um die genannte Achse anhand eines Antriebes in Maschinenquerrichtung verstellt bzw. verschwenkt, wobei eine sehr geringfügige Verdrillung des Drahtes bezüglich seiner Längsrichtung in Kauf genommen werden muß.

Eine weitere, gemäß EP-B1 0 416 136 bekannte Maschine dient zum gleichzeitigen Verlegen von Fahrdraht und Tragseil einer elektrischen Oberleitung die von jeweils einer - auf einem eigenen Trägerrahmen angeordneten - Speichertrommel abgezogen werden. Die beiden Trägerrahmen sind in der vorstehend beschriebenen Weise kippbar ausgebildet, während die Führungseinrichtung bei dieser Maschine aus einem höhenverstellbaren Auslegerkran besteht, der um eine vertikale Achse rotierbar auf dem Maschinenrahmen aufgestellt und an seinem freien Ende mit zwei Umlenkrollen zur Führung von Fahrdraht und Tragseil ausgestattet ist. Der Zick-Zack-Verlauf der Oberleitung wird durch seitliches Verschwenken des Kranes bei kontinuierlicher Vorfahrt der Maschine realisiert.

Weitere Maschinen sind aus US4213596 und aus DE 43 34 063 C1 bekannt.
Die Aufgabe der Erfindung besteht nun in der Schaffung einer Maschine der eingangs beschriebenen Art, mit der insbesondere der Fahrdraht einer Oberleitung unter weitestgehender Vermeidung jeglicher Verwindung oder Verdrillung verlegt werden kann.

Diese Aufgabe wird mit einer gattungsgemäßen Maschine dadurch gelöst, daß der die Speichertrommel und die Zugspannungsvorrichtung lagernde Trägerrahmen durch Antriebe horizontal und senkrecht zur Maschinenlängsrichtung relativ zum Maschinenrahmen querverschiebbar und bezüglich einer vertikalen Schwenkachse verdrehbar ausgebildet ist.

Eine derartige Ausbildung des Trägerrahmens ermöglicht es, diesen auf besonders einfache Weise bezüglich seiner Längsrichtung exakt parallel zur Lage des bereits in der Verlegeposition befindlichen Fahrdrahtes auszurichten. Da in dieser Stellung des Trägerrahmens die Drehachsen der Speichertrommel und auch der die Zugspannungsvorrichtung bildenden Rollen exakt senkrecht zum verlegten Fahrdraht verlaufen und weiters keinerlei Verschwenkung des Trägerrahmens um eine horizontale Achse stattfindet, ist ein absolut geradliniges Abziehen des Drahtes in einer vertikalen Abwickelebene gewährleistet, und zwar ungeachtet des Winkels, den diese Ebene - infolge des Zick-Zack-Verlaufes des Fahrdrahtes - mit der Maschinenlängsachse im jeweiligen Moment einschließt.

Weitere erfindungsgemäße Vorteile ergeben sich aus den Unteransprüchen und der Beschreibung.

Die Erfindung wird im folgenden anhand eines in der Zeichnung dargestellten Ausführungsbeispieles näher erläutert.

Es zeigen:
Fig. 1 und 2 eine schematisierte Seitenansicht bzw. Draufsicht auf eine erfindungsgemäß ausgebildete Maschine zum Verlegen einer Oberleitung eines Gleises, und
Fig. 3 ein Detail der Lagerung des verschiebbaren Trägerrahmens.

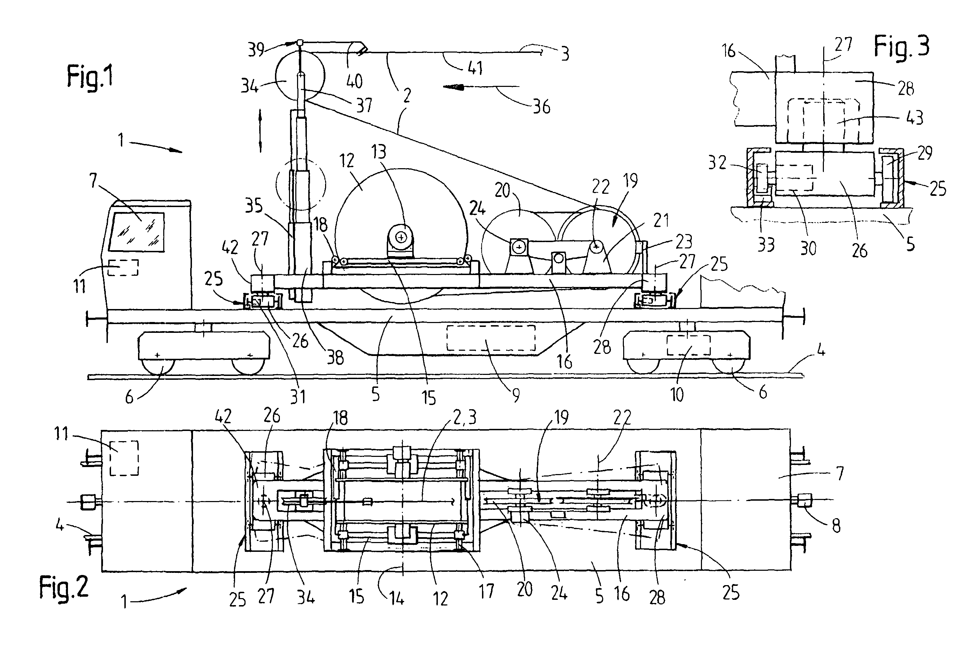

In Fig. 1 und 2 ist eine gleisverfahrbare Maschine 1 zum Verlegen eines Fahrdrahtes 2 (bzw. gegebenenfalls eines Tragseiles) einer Oberleitung 3 eines Gleises 4 dargestellt. Die Maschine 1 weist einen Maschinenrahmen 5 auf, der über zwei Schienenfahrwerke 6 auf dem Gleis 4 abgestützt ist und an jedem Längsende eine Fahr- bzw. Arbeitskabine 7 und eine Kupplung 8 zwecks Eingliederung in einen Zugsverband aufweist. Eine Energiequelle 9 ist für die Energieversorgung eines Fahrantriebes 10 der Maschine 1 und aller weiteren, noch zu beschreibenden Antriebe vorgesehen, die anhand einer Steuereinrichtung 11 bedienbar bzw. fernsteuerbar sind.

Der zu verlegende Fahrdraht 2 ist auf einer Speichertrommel 12 aufgewickelt, die mittels Lagerblöcken 13 um eine in Maschinenquerrichtung verlaufende, horizontale Rotationsachse 14 drehbar auf einem Gleitschlitten 15 montiert ist. Dieser ist seinerseits auf einem Trägerrahmen 16 gelagert und relativ zu diesem auf Gleitstangen 17 anhand von Verstellantrieben 18 in Maschinenquerrichtung verschiebbar. Neben der Speichertrommel 12 ist auf dem Trägerrahmen 16 eine Zugspannungsvorrichtung 19 vorgesehen, die aus zwei von der Speichertrommel 12 in Maschinenlängsrichtung distanzierten Rollen 20 gebildet ist. Diese - ebenfalls mittels Lagerblöcken 21 auf dem Trägerrahmen 16 befestigten - Rollen 20 sind um Achsen 22 rotierbar, die parallel zur Rotationsachse 14 verlaufen, wobei eine der Rollen mit einer Bremsvorrichtung 23 ausgestattet ist. Zur Aufrechterhaltung einer konstanten Zugspannung sind die Rollen 20 durch einen Hydromotor 24 beaufschlagbar.

Der Trägerrahmen 16 ist anhand von zwei horizontalen Führungen 25 mit dem Maschinenrahmen 5 verbunden, die auf diesem in Maschinenlängsrichtung voneinander distanziert angeordnet sind und in Maschinenquerrichtung verlaufen. In den beiden Führungen 25 ist - in deren Längsrichtung verstellbar - ein Schlitten 26 gelagert, auf dem jeweils eines der in Maschinenlängsrichtung voneinander distanzierten Enden 28 bzw. 42 des Trägerrahmens 16 abgestützt und um eine vertikale Schwenkachse 27 verdrehbar gelagert ist.

Wie insbesondere in Fig. 3 genauer ersichtlich, weist jeder Schlitten 26 in der Führung 25 abrollbare Laufrollen 29 auf. Zusätzlich ist jeder Schlitten 26 mit einem über einen Antrieb 30 (bzw. 31) rotierbaren Ritzel 32 ausgestattet, welches mit einer in der Führung 25 montierten, in Maschinenquerrichtung verlaufenden Zahnstange 33 in Eingriff steht und eine Querverschiebung des Trägerrahmens 16 senkrecht zur Maschinenlängsrichtung relativ zum Maschinenrahmen 5 bewirkt. Die beiden Enden 28,42 des Trägerrahmens 16 sind dabei durch Beaufschlagung des jeweiligen Antriebes 30 bzw. 31 unabhängig voneinander querverstellbar. Aus diesem Grund ist die Lagerung des einen Endes 28 des Trägerrahmens 16 derart ausgebildet, daß sie über einen Drehzapfen 43 eine geringfügige Ausgleichsbewegung bzw. Verschiebung des Trägerrahmens in Maschinenlängsrichtung relativ zum zugeordneten Schlitten 26 erlaubt.

Alternativ zur oben beschriebenen Konstruktion sind für die Ausbildung der Führung 25 natürlich auch eine Reihe anderer Varianten denkbar, etwa z.B. in Form eines Gleitlagers, auf dem der Trägerrahmen anhand eines hydraulischen Zylinder-Kolben-Antriebes verschiebbar gelagert ist, etc.

Die Maschine 1 ist weiters mit einer Umlenkrolle 34 ausgestattet, die zum höhen- und seitenmäßigen Führen des Fahrdrahtes 2 vorgesehen ist. Diese durch einen Antrieb 35 höhenverstellbare Umlenkrolle 34 ist am Trägerrahmen 16 befestigt und an dessen - bezüglich der durch einen Pfeil 36 angedeuteten Fahrtrichtung der Maschine 1 - vorderen Ende 42 positioniert. Die Speichertrommel 12 und die Zugspannungsvorrichtung 19 sind dabei in Abziehrichtung des Fahrdrahtes 2 vor der Umlenkrolle 34 am Trägerrahmen 16 angeordnet. Die Umlenkrolle 34 ist in einer gabelartigen Halterung 37 am oberen Ende eines anhand des Antriebes 35 teleskopisch ausfahrbaren, vertikalen Mastes 38 befestigt. Auf der Halterung 37 ist außerdem ein Tastorgan 39 zum Abtasten eines von der Umlenkrolle 34 in Abziehrichtung wegführenden Drahtabschnittes 41 des Fahrdrahtes 2 montiert, das einen den Fahrdraht 2 berührenden Taster 40 aufweist. Das Tastorgan 39 ist zur Steuerung der Querverschiebung des Trägerrahmens 16 ausgebildet und steht zu diesem Zweck über die Steuereinrichtung 11 insbesondere mit dem Antrieb 30 in Verbindung, der zur Querverschiebung des der Umlenkrolle 34 in Maschinenlängsrichtung gegenüberliegenden Endes 28 des Trägerrahmens 16 vorgesehen ist.

Im Arbeitseinsatz zum Verlegen des Fahrdrahtes 2 wird die Umlenkrolle 34 anhand des Antriebes 35 in die korrekte Höhenlage verbracht und der Fahrdraht 2 von der Speichertrommel 12 über die Zugspannungsvorrichtung 19 und die Umlenkrolle 34 geführt. Zur Herstellung des vorgeschriebenen Zick-Zack-Verlaufes der verlegten Oberleitung 3 bzw. des Fahrdrahtes 2 wird nun - unter kontinuierlicher Vorfahrt der Maschine 1 - das in Fahrt- bzw. Arbeitsrichtung (Pfeil 36) vordere Ende 42 des Trägerrahmens 16 in Maschinenquerrichtung hin und her verstellt, indem eine in der vorderen Fahr- bzw. Arbeitskabine 7 befindliche Bedienungsperson anhand der Steuereinrichtung 11 den zugeordneten Antrieb 31 entsprechend beaufschlagt (s. strichpunktiert gezeigte Stellung des Trägerrahmens 16 in Fig. 2).

Durch den am Fahrdraht 2 in seinem bereits in der Verlegeposition befindlichen Drahtabschnitt 41 anliegenden Taster 40 registriert das Tastorgan 39 die aktuelle Fahrdrahtlage und steuert durch Beaufschlagung des - dem hinteren Ende 28 des Trägerrahmens 16 zugeordneten - Antriebes 30 den Trägerrahmen 16 durch Verdrehen desselben um die vertikale Schwenkachse 27 automatisch entsprechend nach, so daß die Längsachse des Trägerrahmens 16 immer parallel zum verlegten Fahrdraht 2 verläuft. Da die Umlenkrolle 34 und die Rollen 20 der Zugspannungsvorrichtung 19 in einer gemeinsamen Vertikalebene liegen, wird also diese Vertikalebene um die beiden vertikalen Schwenkachsen 27 verschwenkt und der Lage des verlegten Fahrdrahtes 2 angepaßt, bis auch dieser in besagter Vertikalebene verläuft und der Fahrdraht 2 somit keinerlei Verdrehung oder Verdrillung unterworfen wird.

## Patentansprüche

1. Gleisverfahrbare Maschine zum Verlegen eines Fahrdrahtes (2) und/oder eines Tragseiles einer Oberleitung (3) eines Gleises (4), mit einem auf Schienenfahrwerken (6) abgestützten Maschinenrahmen (5) und einem mit diesem verbundenen Trägerrahmen (16), der eine aufgewickelten Fahrdraht (2) bzw. Tragseil beinhaltende Speichertrommel (12) und eine zur Aufbringung der vorgeschriebenen Zugspannung vorgesehene Zugspannungsvorrichtung (19) aufweist, sowie mit einer Umlenkrolle (34) zum höhen- und seitenmäßigen Führen des Drahtes, **dadurch gekennzeichnet, daß** der die Speichertrommel (12) und die Zugspannungsvorrichtung (19) lagernde Trägerrahmen (16) durch Antriebe (30,31) horizontal und senkrecht zur Maschinenlängsrichtung relativ zum Maschinenrahmen (5) querverschiebbar und bezüglich einer vertikalen Schwenkachse (27) verdrehbar ausgebildet ist.

2. Maschine nach Anspruch 1, **dadurch gekennzeichnet, daß** die Antriebe (30,31) zur Verschiebung des Trägerrahmens (16) durch ein Tastorgan (39) steuerbar sind, das zum Abtasten eines von der Umlenkrolle (34) in Abziehrichtung wegführenden Drahtabschnittes (41) des Fahrdrahtes (2) ausgebildet ist.

3. Maschine nach Anspruch 2, **dadurch gekennzeichnet, daß** das Tastorgan (39) auf einer die Umlenkrolle (34) lagernden Halterung (37) befestigt und als den Fahrdraht (2) berührender Taster (40) ausgebildet ist.

4. Maschine nach einem der Ansprüche 1 bis 3, **dadurch gekennzeichnet, daß** die Speichertrommel (12) und die Zugspannungsvorrichtung (19) in Abziehrichtung des Fahrdrahtes (2) vor der Umlenkrolle (34) am Trägerrahmen (16) positioniert sind.

5. Maschine nach einem der Ansprüche 2 bis 4, **dadurch gekennzeichnet, daß** das Tastorgan (39) zur Beaufschlagung jenes Antriebes (30) ausgebildet ist, der zur Querverschiebung des der Umlenkrolle (34) in Maschinenlängsrichtung gegenüberliegenden Endes (28) des Trägerrahmens (16) vorgesehen ist.

6. Maschine nach einem der Ansprüche 1 bis 5, **dadurch gekennzeichnet, daß** die durch einen Antrieb (35) höhenverstellbare Umlenkrolle (34) am Trägerrahmen (16) befestigt ist.

7. Maschine nach Anspruch 6, **dadurch gekennzeichnet, daß** die Umlenkrolle (34) bezüglich der Fahrtrichtung der Maschine (1) am vorderen Ende (42) des Trägerrahmens (16) positioniert ist.

## Claims

1. A machine, mobile on a track, for installing a contact wire (2) and/or a carrying cable of an overhead line (3) of a track (4), including a machine frame (5) supported on on-track undercarriages (6) and a carrier frame (16), connected thereto, which comprises a storage drum (12), containing rolled-up contact wire (2) or supporting cable, and a tensile stress device (19) provided for generating the prescribed tensile stress, and also including a deflection roller (34) for vertically and laterally guiding the wire, **characterized in that** the carrier frame (16), supporting the storage drum (12) and the tensile stress device (19), is designed for transverse adjustment horizontally and perpendicularly to the longitudinal direction of the machine relative to the machine frame (5) by means of drives (30,31) and for rotation with regard to a vertical pivot axis (27).

2. A machine according to claim 1, **characterized in that** the drives (30,31) for displacing the carrier frame (16) are controllable by means of a feeler member (39) which is designed for tracing a wire section (41) of the contact wire (2) leading away from the deflection roller (34) in the pulling direction.

3. A machine according to claim 2, **characterized in that** the feeler member (39) is mounted on a bracket (37) supporting the deflection roller (34) and is designed as a feeler (40) touching the contact wire (2).

4. A machine according to one of claims 1 to 3, **characterized in that** the storage drum (12) and the tensile stress device (19) are positioned on the carrier frame (16) so as to precede the deflection roller (34) in the direction of pulling of the contact wire (2).

5. A machine according to one of claims 2 to 4, **characterized in that** the feeler member (39) is designed for activation of that drive (30) which is provided for transverse displacement of the end (28) of the carrier frame (16) lying opposite the deflection roller (34) in the longitudinal direction of the machine.

6. A machine according to one of claims 1 to 5, **characterized in that** the deflection roller (34), vertically adjustable by means of a drive (35), is fastened to the carrier frame (16).

7. A machine according to claim 6, **characterized in that** the deflection roller (34) is positioned at the forward end (42) of the carrier frame (16) with regard to the direction of travel of the machine (1).

## Revendications

1. Machine mobile sur rails pour la pose d'un fil de contact (2) et/ou d'un câble porteur d'une ligne caténaire (3) d'une voie ferrée (4), avec un bâti de machine (5) soutenu sur des bogies (6) et avec un bâti porteur (16) qui est assemblé au précédent et qui présente un tambour d'enroulement (12) contenant le fil de contact (2) ou le câble porteur enroulé et un dispositif (19) de contrainte de traction prévu pour imprimer la contrainte de traction prescrite, et avec une poulie de renvoi (34) pour guider en hauteur et latéralement le fil, **caractérisée en ce que** le bâti porteur (16) recevant le tambour d'enroulement (12) et le dispositif (19) de contrainte de traction est conçu, au moyen d'entraînements (30, 31), à déplacement transversal par rapport au bâti de machine (5), horizontalement et perpendiculairement à la direction longitudinale de la machine, et à rotation par rapport à un axe de pivotement vertical (27).

2. Machine selon la revendication 1, **caractérisée en ce que** les entraînements (30, 31) pour le déplacement du bâti porteur (16) peuvent être commandés par un organe palpeur (39) qui est conçu pour palper un tronçon de fil (41) du fil de contact (2) qui s'éloigne de la poulie de renvoi (34) dans la direction de dévidage.

3. Machine selon la revendication 2, **caractérisée en ce que** l'organe palpeur (39) est fixé sur un support (37) recevant la poulie de renvoi (34) et est réalisé sous forme de palpeur (40) entrant en contact avec le fil de contact (2).

4. Machine selon l'une quelconque des revendications 1 à 3, **caractérisée en ce que** le tambour d'enroulement (12) et le dispositif (19) de contrainte de traction sont positionnés sur le bâti porteur (16) avant la poulie de renvoi (34) dans la direction de dévidage du fil de contact (2).

5. Machine selon l'une quelconque des revendications 2 à 4, **caractérisée en ce que** l'organe palpeur (39) est conçu pour solliciter l'entraînement (30) qui est prévu pour le déplacement transversal de l'extrémité (28) du bâti porteur (16) qui est opposée à la poulie de renvoi (34) dans la direction longitudinale de la machine.

6. Machine selon l'une quelconque des revendications 1 à 5, **caractérisée en ce que** la poulie de renvoi (34), réglable en hauteur au moyen d'un entraînement (35), est fixée sur le bâti porteur (16).

7. Machine selon la revendication 6, **caractérisée en ce que** la poulie de renvoi (34) est positionnée, relativement à la direction de marche de la machine (1), à l'extrémité avant (42) du bâti porteur (16).
